# EUROPEAN PATENT APPLICATION

(11) **EP 2 527 215 A1**
(43) Date of publication of application: **28.11.2012**
(21) Application number: 12003996.1
(22) Date of filing: 22.05.2012
(51) Int. Cl.: B60S 3/04

(54) **Spraying device for a wheel washing machine**

(30) Priority: 23.05.2011 IT MO20110123
(71) Applicant: TECO S.R.L., 42015 Correggio (RE) (IT)
(72) Inventor: Barbetti, Mauro, 42015 Correggio (Regio Emilia) (IT); Barbetti, Michele, 42015 Corregio (Regio Emilia) (IT); Pellacani, Ginafranco, 42015 Corregio (Regio Emilia) (IT); Lotti, Roberto, 42015 Corregio (Regio Emilia) (IT)
(74) Representative: Bergamini, Silvio

(57) **Abstract**

A spraying device for a wheel washing machine (1), particularly for vehicle wheels (R) having a minimum radius (R1) and a maximum radius (R3), said machine comprising: a washing chamber (4) in which at least two parallel rollers (7, 8) are arranged for a wheel (R) designed to be washed and dried to be laid and rotatably driven thereon in a washing position; supply means (11, 12) for supplying washing liquid (L), having a longitudinal axis (A) and arranged in said washing chamber (4); ejector means (17), for ejecting said washing liquid (L) in the form of substantially flat jets, transversely facing said wheel (R) to be washed and formed in said supply means (11, 12), said ejector means comprising at least an ejecting groove (36) which is diagonally oriented with respect to said longitudinal axis (A) of said supply means, with a jet dividing and deflecting apparatus (37) mounted in front of it, for dividing and deflecting said jets (17) into at least two jets defining respective spraying areas (A1, A2).

## Description

### Background art

Wheel washing machines, particularly for use with vehicle wheels, are known as "wheel washers", and are typically composed of a watertight base reservoir containing a washing liquid, with a casing mounted thereto, which is also watertight, has a substantially prismatic shape and defines an internal washing chamber.

The casing has an open front face with a sealable door through which the wheels to be washed may be introduced or the washed and dried wheels may be extracted.

Furthermore, connecting passages are provided between the upper casing and the base reservoir, through which the washing liquid falls into the reservoir after being sprayed on a wheel.

Two transverse parallel rollers are arranged in the washing chamber, namely in a lower portion thereof, one of which is rotatably driven by a motor unit mounted to the wheel washing machine external to the casing and the other is idle.

The two rollers are placed at a predetermined distance and provide support to the wheels to be washed, which are in a standing position, to rotate as they are washed and dried.

Smaller idle rollers are also fixed via respective supports to the inner walls of the washing chamber, and have the purpose of maintaining the wheel in a vertical position as it rotates during the washing and drying process, and prevent it from swinging or hitting the inner sidewalls of the casing.

Also, the washing chamber contains washing nozzles and drying nozzles, which are mounted on both sides, integral with the inner walls of the casing and in mutually faced relation, between which a wheel to be washed and dried is designed to be placed and rotated by the motor-driven roller.

Each of the washing nozzles typically consists of a tube section whose bottom end is open and has a profile adapted to be coupled and fixed to a washing fluid carrying pipe, which is connected to a pump, also fixed to the wheel washing machine, external to the washing chamber, and whose opposite top end is closed, but has a hole opening into a curved baffle, whose base is substantially tangent to the hole and is bent into an arc toward the wheel area, to deviate the washing fluid jets ejected from the hole of the upper end perpendicularly to the longitudinal axis of the tube section.

The curved baffle has the additional purpose of expanding the washing fluid jets for the latter to substantially extend around a plane tangent to a free end of the baffle.

The washing nozzles have a flange for attachment thereof to their respective inner walls of the washing chamber, e.g. by means of screw elements.

Each nozzle is typically connected to its wall of the washing chamber, with the tube section arranged vertically, and parallel to the wall, and the baffle oriented such that the plane around which the nozzle jet extends has a horizontal extension, substantially parallel to the longitudinal axes of the first and second transverse wheel-supporting rollers.

Second drying nozzles are also typically connected to these nozzles.

An optimal washing effect is obtained when the nozzle jets impinge upon the wheel to be washed in a direction that is as transverse as possible and not parallel thereto, for maximized mechanical dirt removal due to the impact of the washing liquid jets onto the wheel surface.

Furthermore, the largest part as possible of the washing liquid jets should advantageously hit the surface of the wheel, irrespective of its diameter and width, for proportional reduction of the washing times required for cleaning wheels of smaller diameters and sizes, which would not be possible if the nozzle jets failed to fully hit the wheel.

A wheel rim face turned toward the exterior of a vehicle, e.g. a car, has, especially in wheels with light alloy rims, a plurality of spokes connecting a central hub to the outer shell upon which the tire is mounted.

Each of these spokes has an outer face which is substantially perpendicular to the axis of rotation of the wheel and is delimited by two lateral faces, substantially parallel to the axis of rotation of the wheel.

This characteristic of the prior art suffers from a drawback in that the washing liquid jets, having a direction substantially parallel to the axis of the wheel, hit the lateral faces of the rim spokes in a tangential direction, which will cause a reduced washing effect.

### Objects of the invention

One object of the invention is to improve the state of the art.

Another object of the invention is to provide a spraying device for a wheel washing machine, particularly for vehicle wheels, that affords a full, satisfactory washing effect, even on wheels having spokes with surfaces oriented along the axis of rotation.

A further object of the invention is to reduce the times, and hence the costs of the washing cycles in wheel washing machines.

In one aspect the invention relates to a device for a wheel washing machine, particularly for vehicle wheels as defined by the characteristics of claim 1.

Therefore, the invention affords the following advantages:
affording full washing of vehicle wheels, regardless of their conformation and diameter;
optimizing the washing cycles of the wheel washing machines; and
obtaining washing liquid savings.

### Brief description of the drawings

Further characteristics and advantages of the invention will be more apparent upon reading of the description of an embodiment of a device for a wheel washing machine, which is illustrated by way of example and without limitation in the annexed drawings, in which:
Figure 1 is a perspective view of a wheel washing machine, or wheel washer, of known type;
Figure 2 is a perspective view of a prior art wheel spraying device;
Figure 3 is a schematic side view of the wheel washing machine of Figure 1, showing a distribution of the washing jets sprayed by the spraying device of the invention;
Figure 4 is a side view of a wheel having a rim with radial spokes;
Figure 5 is a broken-away, cross-sectional view of a wheel washing area in a washing chamber of a wheel washing machine of the invention;
Figure 6 is a perspective view of a spraying device of the invention, that can spray washing liquid over washing planes as schematically shown in the Figure;
Figure 7 is a schematic side view of a wheel washing machine having a spraying device of the invention, with the spraying areas of the spraying jets highlighted;
Figure 8 is a schematic side view of the wheel washing machine of Figure 7, showing possible diameters of vehicle wheels to be washed and a spraying area;
Figure 9 is a schematic side view of the wheel washing machine of Figure 8, in which the spraying area is inclined at an angle other than that of Figure 8;
Figure 10 is a schematic side view of the wheel washing machine of Figure 9, showing an additional inclination of the spraying area;
Figure 11 is a schematic, broken-away side view of a detail of the spraying device of Figure 6;
Figure 12 is a schematic, broken-away front view of the detail of Figure 11.

### Detailed description of a preferred embodiment

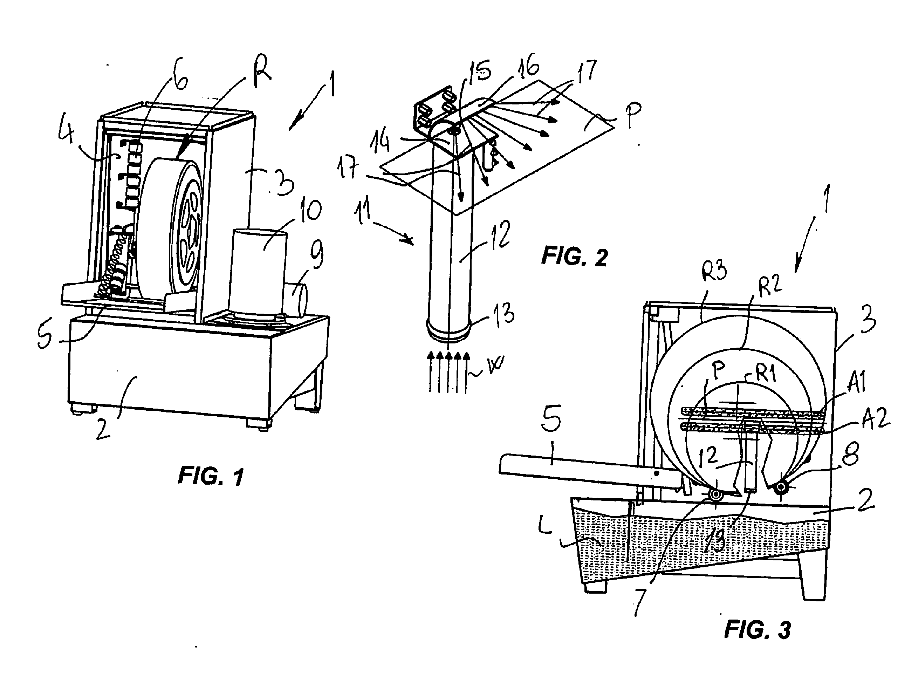

Referring to Figures 1, 2, 3, a wheel washing machine of known type is referenced 1, and comprises a base reservoir 2 containing a washing liquid "I", and having a casing 3 mounted thereto, which has the shape of a parallelepiped and defines a washing chamber 4 therein.

The casing 3 is peripherally closed but has a face, designated as a front face, which is adapted to be sealed or opened by a closure door 5.

A plurality of idle rollers 6 are mounted in the chamber, to both lateral walls thereof, and are designed to hold a wheel "R" to be washed, which is introduced into the chamber 3, in a substantially vertical position.

Two parallel rollers 7 and 8 are transversely mounted in a lower portion of the chamber, with the wheel "R" supported thereon, as shown in Figures 1 and 3, at least the roller 8 being rotatably driven by a motor unit 9 mounted external to the casing 3.

The wheel washing machine 1 is also equipped with a pump 10, which sucks in the washing liquid "L" and conveys it to a pair of spraying devices 11 mounted on both sides, and integral to the inner walls of the chamber 4, in mutually facing relation, with the wheel "R" to be washed designed to be placed therebetween.

Drying nozzles (not shown) are also combined with the spraying devices 11, in facing relation to the wheel "R" and, upon actuation, eject pressurized air jets for drying it after washing.

Referring to Figure 2, each spraying device is shown to comprise a tube section 12, whose bottom end has a profile 13 designed for watertight connection to an end of a supply pipe for supplying the liquid "L" in the direction of arrows "W", and whose top end has a closing plate 14, with a hole 15 formed therein for ejection of the liquid "L" pumped by the pump 10.

A baffle element 16 having a curved profile extends from the plate 16, and deviates the flows of the washing jets, schematically shown by the arrows 17, over a substantially horizontal plane "P", as shown in Figures 2 and 3.

The latter figure also highlights by pinholes two elongate parallel spraying areas A1 and A2 at each side of the plane "P" and representing two spraying areas for the liquid "L".

As particularly shown in Figure 3, the two spraying areas A1 and A2 cover the lateral circumferences of the wheels "R" to be washed in different manners, according to their respective diameters, which may range from a minimum "R1" to a maximum "R3", through an intermediate diameter "R2".

It can be noted that the areas A1 and A2 fully intersect the minimum diameter "R1", whereas the two diameters "R2" and "R3" are only partially intersected.

In other words, the liquid "L" horizontally sprayed across the two spraying areas A1 and A2 does not satisfactorily sprays the wheel "R" because, in the case of the minimum diameter "R1", the liquid "L" is partially sprayed also beyond the profile of the wheel "R" and hence this part does not effectively contributes to remove dirt from the wheel "R".

The same applies to the intermediate diameter "R2" and the maximum diameter "R3", because the two areas are smaller than the transverse shapes of the wheels.

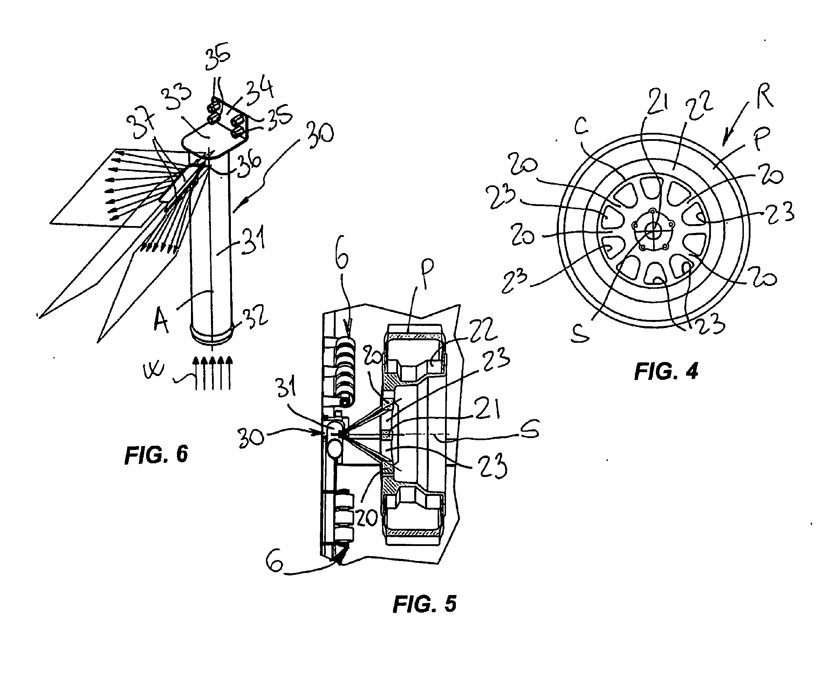

Referring to Figure 4, there is shown a wheel "R" that has a rim with a plurality of spokes 20 connecting the central hub 21 to the peripheral shell 22 to which the tire "P" is mounted.

Specially shaped through apertures 23 are defined between the spokes 20.

Referring to Figure 6, there is shown a spraying device 30 of the invention, comprising a tube section 31 which, like in the known case, has a bottom end with a connector profile 32 for connection to a supply pipe (not shown) for supplying liquid "L" in the direction of arrows "W".

The opposite top end is completely closed by a blind plate 33 having an extension 34 designed for connection to an inner wall of the chamber 4, e.g. by means of bolts 35.

A slit 36 is formed on the outer surface of the tube section 31, and is inclined to the longitudinal axis "A" of the section 31 and namely has a substantially helical profile to conform with its curved surface.

A pair of baffles 37 are mounted in front of the slit 36 for deviating the flows of the liquid jets "L" ejected by the slit 36, and pumped by the pump 10 of the wheel washing machine 1.

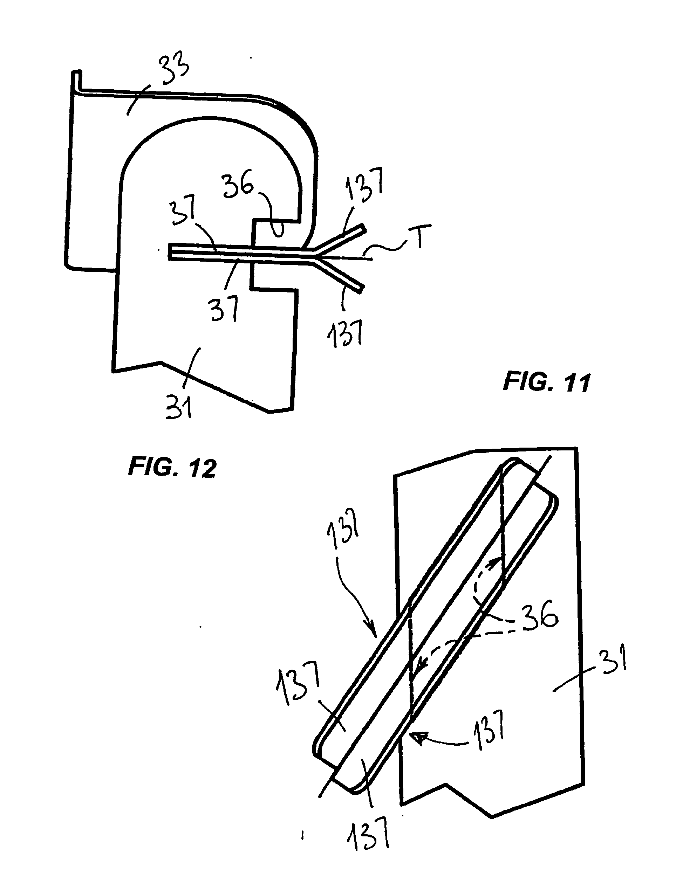

Figures 11 and 12 show the arrangements of the slit 36 and the pair of baffles 37 on the tube section 31 more clearly, and particularly show that the outwardly facing portions 137 of the two baffles 37 are bent in diverging relation.

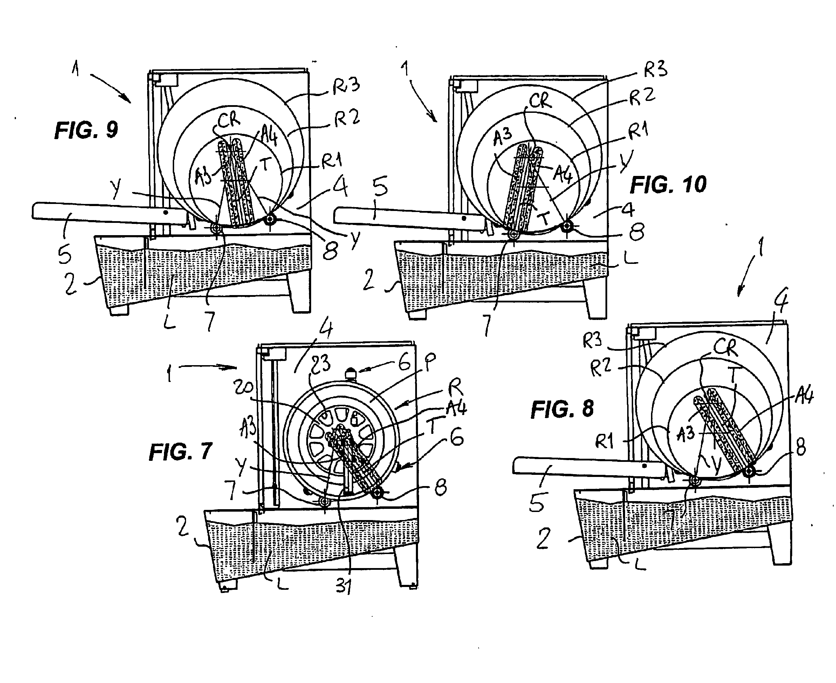

Referring to Figures 7 to 10, the wheel washing machine 1 is shown with the spraying device 30 of the invention mounted thereto, instead of that of the prior art 11.

Referring to Figure 7, a wheel "R" placed in the washing chamber 4 is sprayed with jets of liquid "L" over two parallel washing areas "A3", "A4", arranged symmetrically with respect to a median plane of symmetry, designated by the line "T" and indicated by pinholes for clarity of illustration.

This median plane of symmetry "T" is inclined to the longitudinal axis "A" of the tube section 31 and each washing area "A3", "A4" is generated by the direction imparted by the two bent portions 137 of the two baffles 37 to the flow of liquid "L" ejected through the slit 36.

As shown in the figures, the inclination of the median plane "T" substantially conforms with the inclination of the spokes "Y" of a wheel "R" having the largest diameter "R3" among those of the wheels that can be introduced in the washing chamber 4, which spokes define a sector of the wheel "R".

The two spokes "Y" that define the above mentioned sector are those that join the center "CR" of the wheel "R" with the two rollers 7 and 8.

As shown in the figures, this feature allows the two spraying areas "A3" and "A4" to spray a portion of the wheel "R" which, at the least, in the case of wheels having the maximum diameter "R3", is a semi-diameter.

The operation of the spraying device for washing wheels can be understood from the above description and is indicated below with reference to a wheel "R" having the largest diameter "R3" among those of the wheels that can be introduced into the washing chamber 34 of the wheel washing machine 1:
an operator opens the door 5 ad introduces the wheel "R" into the washing chamber 4, by placing it in a standing position on the two rollers 7 and 8.

Then, the operator closes the door 5 and starts the motor unit 9 to rotate the drive roller 8, which in turn transfers its rotary motion to the wheel "R", that starts to rotate in the washing chamber 4, while being maintained in a vertical or substantially vertical position at both sides by the rollers 6.

Then, the operator starts the pump 10 and the washing liquid "L" is pushed from the reservoir 2 to the two tube sections 31 mounted at both sides to the inner walls of the washing chamber 4.

The liquid "L" is ejected through the slit 36 and the two jets are deviated by the bent portions 137 of the baffles 37, thereby creating two washing areas "A3" and "A4", symmetrical to the median plane "T".

These two jets spray the surfaces of the wheel "R" with angles of incidence diverging from the center axis "S" of the wheel "R", the divergence angle increasing with the distance from the center "CR" of the wheel "R" and hence generating impact force components diagonally directed with respect to the inner surfaces of the spokes 20, the latter being so sprayed with high impact force jets, that can remove the dirt from the interior of the spokes 20 of the rim "C".

The rotation of the wheel "R" allows the entire surface of the wheel "R" to be washed to pass through the two spraying areas "A3" and "A4".

Once washing is completed with a few cycles of rotation of the wheel "R", pressurized air is blown through drying nozzles mounted to both sides of the washing area, while the delivery of liquid "L" is stopped.

As the wheel "R" keeps on rotating, it is completely dried.

Finally, the operator may open the door 5 and extract the thoroughly washed wheel "R".

The same procedure applies to wheels having smaller diameters "R2" or "R1", with the advantage that, in these cases, the two spraying areas "A3" and "A4" cover a larger surface of the wheels "R", thereby affording a reduction of the rotation and spraying cycles.

The above disclosed invention was found to fulfill the intended objects.

The invention is susceptible to a number of changes and variants within the inventive concept.

Furthermore, all the details may be replaced by other technically equivalent parts.

In practice, any materials, shapes and sizes may be used as needed, without departure from the scope of the following claims.

## Claims

1. A spraying device for a wheels washing machine (1), in particular vehicle wheels (R) having a minimum radius (R1) and a maximum radius (R3), said machine comprising:
- A washing chamber (4) wherein two parallel rollers (7, 8) are fitted on which a wheel (R) to be washed and dried can be leaned and rotatably driven arranged in a washing position;
- Feeding means (11, 12) of a washing liquid (L) having a longitudinal axis (A) and arranged inside said washing chamber (4);
- Ejecting means of jets of said washing liquid (L) in a form of substantially flat jets (17) and transversally facing said wheel (R) to be washed and obtained in said feeding means (11, 12),
**characterized in that** said ejecting means comprise at least an ejecting groove (36) which is diagonally oriented in respect with said longitudinal axis (A) of said feeding means (11, 12) and in front of which a dividing and swerving apparatus (37 of said jets (17) is mounted into at least two jets defining respective spraying areas (A1, A2).

2. A device according to claim 1, wherein said groove (36) is helical shaped.

3. A device according to claim 1, wherein said groove (36) has a substantially constant opening.

4. A device according to claim 1, wherein said respective spraying areas (A1, A2) are substantially flat and are placed at opposite zones in respect with a middle symmetry plane (T).

5. A device according to claim 4, wherein said middle symmetry plane (T) is substantially aligned in parallel to a maximum radius (R3) of a wheel (R) to be washed.

6. A device according to claim 1, wherein said middle symmetry plane (T) is oriented according to a maximum radius (R3) connecting a substantially centred point (S) of said wheel (R) having maximum radius (R3) and at least one of said parallel rollers (7, 8).

7. A device according to claim 1, wherein said middle symmetry plane (T) is oriented according to an orientation comprised in a circular sector of said wheel (R) having a maximum radius, and defined between a radius (Y) connecting the centre (S) of said wheel (R) to one of said rollers (7) and a radius (Y) connecting the centre (S) of said wheel (R) to the other roller (8). A wheel washing machine **characterized in that** it comprises a spraying device according to one or more of preceding claims.
